# EUROPÄISCHE PATENTSCHRIFT

(11) **EP 3 971 426 B1**
(45) Veröffentlichungstag und Bekanntmachung des Hinweises auf die Patenterteilung: **30.07.2025**
(21) Anmeldenummer: 21190860.3
(22) Anmeldetag: 11.08.2021
(51) Int. Cl.: F16B 13/14, F16B 25/00, F16B 33/00, F16B 37/14

(54) **VERFAHREN ZUM SETZEN EINES ANKERELEMENTS SOWIE ANORDNUNG MIT EINEM DERARTIGEN ANKERELEMENT IN EINEM WERKSTOFF**
METHOD FOR SETTING AN ANCHOR ELEMENT AND ARRANGEMENT COMPRISING SUCH AN ANCHOR ELEMENT IN A MATERIAL
PROCÉDÉ DE MISE EN PLACE D'UN ÉLÉMENT D'ANCRAGE, AINSI QU'AGENCEMENT DOTÉ D'UN TEL ÉLÉMENT D'ANCRAGE DANS UN MATÉRIAU

(30) Priorität: 28.08.2020 DE 102020210921
(43) Veröffentlichungstag der Anmeldung: 23.03.2022
(73) Patentinhaber: TOGE Dübel GmbH & Co. KG, 90431 Nürnberg (DE)
(72) Erfinder: Gerhard, Andreas, 90427 Nürnberg (DE)
(74) Vertreter: Rau, Schneck & Hübner Patentanwälte Rechtsanwälte PartGmbB

(56) Entgegenhaltungen:
- EP-A1- 3 330 550
- EP-B1- 1 710 453
- DE-T2- 602004 007 971
- DE-T2- 69 125 289
- DE-U1- 202009 014 039
- FR-A1- 2 404 141
- DIYBOOK: "Schwerlastanker montieren", 2 June 2017 (2017-06-02), XP055887582, Retrieved from the Internet <URL:https://www.youtube.com/watch?v=nb8dZMiSKj4&lc=UgyNojjDWWToKotogk14AaABAg> [retrieved on 20220204]

## Beschreibung

Die vorliegende Patentanmeldung nimmt die Priorität der deutschen Patentanmeldung DE 10 2020 210 921.4 in Anspruch.

Die Erfindung betrifft ein Verfahren zum Setzen eines Ankerelements sowie eine Anordnung mit einem derartigen Ankerelement in einem Werkstoff.

EP 1 710 453 B1 offenbart einen Befestigungsanker, der in einem Bohrloch in einem Werkstoff verankert werden kann. Der Befestigungsanker weist einen Befestigungsabschnitt auf, der an der Oberfläche des Werkstoffs aus dem Bohrloch hervorsteht. Derartige Befestigungsanker stehen in von den Herstellern festgelegten Standardlängen zu Verfügung. Wenn die benötigte Länge eines Befestigungsankers für eine Anwendung nur geringfügig größer ist als eine der Standardlängen, muss der Anwender die nächstgrößere Standardlänge auswählen. Der am Bohrloch vorstehende Befestigungsabschnitt ist in diesem Fall sehr lang und stellt insbesondere ein Sicherheitsrisiko und/oder ein Hindernis dar.

Eine im Internet (www.youtube.com/watch?v=nb8dZMiSKj4) verfügbare Videodatei zeigt eine Montage eines Standfußes auf einem Betonuntergrund mittels Ankerschrauben. Die Ankerschrauben ragen unterschiedlich weit aus den Bohrlöchern hervor.

Weitere Befestigungen sind bekannt aus DE 20 2009 014 039 U1, EP 3 330 550 A1, DE 60 2004 007 971 T2, DE 691 25 289 T2 und FR 2 404 141 A1.

Alternativ könnte der Befestigungsanker mit einer für die Anwendung individuell angepassten Anwendungslänge hergestellt werden. Die Produktionskosten für einen Befestigungsanker mit individuell festgelegter Länge sind hoch.

Der Erfindung liegt die Aufgabe zu Grunde, das Setzen eines Ankerelements zu vereinfachen und insbesondere anwendungsunabhängig, kosteneffizient, zuverlässig und/oder risikofrei zu ermöglichen.

Diese Aufgabe wird durch die Merkmale der Patentansprüche 1 und 9 gelöst. Erfindungsgemäß wurde erkannt, dass ein Überstandsabschnitt eines Ankerelements, der aus einem Bohrloch in einem Werkstoff herausragt, abgelängt werden kann. Vor dem Ablängen weist der Überstandsabschnitt eine erste Länge auf, die größer ist als eine zweite Länge des Überstandsabschnitts nach dem Ablängen. Erfindungsgemäß kann ein Ankerelement mit einer Standardlänge eingesetzt werden. Ein derartiges Ankerelement steht als Massenprodukt kosteneffizient zur Verfügung. Dadurch, dass der Überstandsabschnitt für die jeweilige Anwendung individualisiert abgelängt wird, stellt dieser weder ein Sicherheitsrisiko noch ein Hindernis dar.

An dem abgelängten Überstandsabschnitt ist eine Schutzkappe befestigt. Dadurch ist einerseits die durch das Ablängen erzeugte Schnittfläche vor Umgebungseinflüssen, insbesondere Witterung und/oder Tausalz, geschützt. Die Schnittfläche des Überstandsabschnitts kann zumindest bereichsweise infolge des Ablängens scharfkantig ausgeführt sein. Durch die Schutzkappe ist ein theoretisches Verletzungsrisiko durch die scharfkantige Schnittfläche verhindert. Eine mechanische Nachbearbeitung der Schnittfläche, insbesondere durch Schleifen oder Entgraten, ist entbehrlich.

Als Ankerelement dient insbesondere eine Ankerschraube, insbesondere eine Verbundankerschraube oder eine Betonschraube. Die Ankerschraube weist insbesondere ein Verankerungsgewinde, insbesondere ein Schneidgewinde, auf, mit dem die Ankerschraube unmittelbar in das Bohrloch eingedreht werden kann. Das Verankerungsgewinde schneidet ein Gewinde in die innere Zylindermantelwand des Bohrlochs. Die Ankerschraube ist insbesondere unmittelbar in dem Bohrloch verankert. Ein Ankerelement kann aber auch ein Verbundanker sein, der in dem Bohrloch ausschließlich mittels einer Klebemasse, insbesondere einem aushärtbaren Material, verankert ist. Der Verbundanker ist insbesondere ohne Verankerungsgewinde, insbesondere ohne Schneidgewinde, ausgeführt. Das Verankern des Verbundankers erfolgt mittels mindestens eines Verankerungsabschnitts, der entlang der Mittellängsachse des Ankerelements einen anwachsenden und anschließend wieder reduzierenden Durchmesser aufweist. Wenn die Klebemasse in dem Bohrloch ausgehärtet ist, ist der Verbundanker mit dem Ankerabschnitt in der ausgehärteten Klebemasse formschlüssig und/oder stoffschlüssig gehalten. Der Verbundanker ist in dem Bohrloch durch die Klebemasse mittelbar verankert.

Der Verbundanker kann auch als Gewindestange ausgeführt sein, die ein Außengewinde aufweist. Das Außengewinde ist insbesondere im Wesentlichen durchgehend ausgeführt. Das durchgehende Außengewinde kann durch eine an der Außenseite der Gewindestange aufgerollte Setztiefenmarkierung unterbrochen sein. Das Außengewinde ist insbesondere ein metrisches Außengewinde, das als Befestigungsgewinde dienen kann. Der in dem Bohrloch angeordnete Abschnitt des Außengewindes der Gewindestange dient als Verankerungsabschnitt. Mittels der Klebemasse wird die Gewindestange in dem Bohrloch festgeklebt. Die Gewindestange ist vorrangig stoffschlüssig und insbesondere ausschließlich stoffschlüssig in dem Bohrloch gehalten. Zwischen der Gewindestange und der Bohrlochwandung besteht ein, insbesondere ausschließlicher, Klebeverbund. Denkbar ist, dass die Klebemasse in axialer Richtung das Außengewinde der Gewindestange hintergreift, sodass zumindest anteilig eine formschlüssige Verbindung zwischen der ausgehärteten Klebemasse und der Gewindestange existiert.

Der Werkstoff ist insbesondere ein Vollbaustoff wie beispielsweise Kalksandstein, Klinker, Vollziegel oder Holz. Vorteilhaft ist, wenn beim Bohren des Bohrlochs in dem Werkstoff keine Hohlstellen getroffen werden, die insbesondere ein Einschneiden eines Gewindes mittels einer Ankerschraube beeinträchtigen könnten. Das Ankerelement ist insbesondere in einem harten Werkstoff, insbesondere in Beton, verankert. Das Ankerelement kann auch in weichen, porösen Werkstoffen wie beispielsweise Asphalt oder Porenbeton verankert werden.

Die Schutzkappe ist insbesondere aus einem robusten Material hergestellt, insbesondere aus Metall, insbesondere Stahl und insbesondere rostfreiem Stahl. Derartiges Material ist insbesondere beständig gegen UV-Strahlen, Salze, insbesondere Tausalz, und/oder Säuren. Die Schutzkappe kann alternativ aus einem Kunststoffmaterial hergestellt sein, insbesondere aus einem verstärkten Kunststoffmaterial, insbesondere aus einem glasfaserverstärkten Kunststoff und/oder aus einem kohlefaserverstärkten Kunststoff. Kunststoffmaterial für die Schutzkappe ist insbesondere bei einer Anwendung im Innenbereich vorteilhaft.

Ein Verfahren, bei dem die Schutzkappe mittels eines Klebematerials befestigt wird, gewährleistet eine zuverlässige und dauerhafte Befestigung der Schutzkappe an dem Überstandsabschnitt. Ein unbeabsichtigtes Lösen der Schutzkappe und damit ein Freilegen des abgelängten Überstandsabschnitts, insbesondere der Schnittfläche, ist zuverlässig verhindert. Durch das Klebematerial ist der abgelängte Überstandsabschnitt, insbesondere die erzeugte Schnittfläche zusätzlich geschützt. Der abgelängte Überstandsabschnitt ist durch das Klebematerial abgedeckt. Die Schutzkappe ist durch die Verwendung eines Klebematerials fest mit dem Überstandsabschnitt des Ankerelements verbunden. Das Klebematerial ist insbesondere eine aushärtbare Masse, insbesondere ein Verbundmörtel. Das Klebematerial ist insbesondere frostbeständig und/oder tausalzbeständig. Insbesondere ist das Klebematerial weitgehend schwindfrei. Ein maximaler Schwund des Klebematerials beträgt höchstens 2 Vol.-%, insbesondere höchstens 1,5 Vol.-%, insbesondere höchstens 1,2 Vol.-% und insbesondere höchstens 1,0 Vol.-%.

Das Klebematerial kann auch ein dauerelastisches Material sein, wie beispielsweise Silikon oder Acryl.

Ein Verfahren, bei dem die beim Ablängen erzeugte Schnittlänge des Ankerelements von der Schutzkappe und von dem Klebematerial abgedeckt ist, gewährleistet einen zuverlässigen Schutz der Schnittfläche. Durch das Ablängen wird das Grundmaterial des Ankerelements an der Schnittfläche freigelegt. Eine an dem Ankerelement vorgesehene Schutzbeschichtung, insbesondere eine Korrosionbeschichtung, ist an der Schnittfläche nicht vorhanden. Durch das Abdecken der Schnittfläche durch die Schutzkappe und durch das Klebematerial ist eine Beeinträchtigung der Schnittfläche, insbesondere durch Korrosion, verhindert. Die Schnittfläche ist durch die Schutzkappe und das Klebematerial, insbesondere vollständig, abgedeckt und insbesondere versiegelt.

Ein Verfahren gemäß Anspruch 2 ermöglicht einen besonders langlebigen Schutz des Ankerelements an dem abgelängten Überstandsabschnitt, insbesondere an der Schnittfläche. Es wurde gefunden, dass durch das Ablängen der Überstandsabschnitt ausgehend von der Schnittfläche einer lokal begrenzten Hitzeeinwirkung ausgesetzt ist. Durch diese Hitzeeinwirkung kann eine an einer Außenseite des Ankerelements vorgesehene Schutzbeschichtung, insbesondere eine Korrosionsbeschichtung, beschädigt werden, sodass die Schutzfunktion für das Ankerelement in diesem Bereich nicht mehr gewährleistet ist. Dadurch, dass sich das Klebematerial entlang einer Klebelänge erstreckt, ist das Ankerelement durch das Klebematerial nicht nur an der Schnittfläche, sondern auch entlang der Klebelänge, insbesondere gegen Korrosion, zuverlässig geschützt. Durch das Klebematerial ist das Ankerelement auch in dem Bereich, in dem die Schutzbeschichtung beschädigt sein könnte, zuverlässig geschützt. Insbesondere ist die parallel zur Mittellängsachse des Ankerelements orientierte Klebelänge größer oder gleich 15% des Nenndurchmessers des Ankerelements, insbesondere größer oder gleich 25%, insbesondere größer oder gleich 35% und insbesondere größer oder gleich 40%.

Für den Fall, dass die Schutzkappe ein Innengewinde aufweist, erstreckt sich das Klebematerial entlang mindestens zwei Gewindegängen der Schutzkappe, insbesondere entlang mindestens drei Gewindegängen und insbesondere entlang mindestens vier Gewindegängen.

Ein Verfahren gemäß Anspruch 3 ermöglicht eine vereinfachte und zuverlässigere Befestigung der Schutzkappe am Ankerelement. Die Schutzkappe kann unmittelbar an dem Ankerelement aufgeschraubt werden. Eine derartige Schutzkappe mit Innengewinde wird auch als Hutmutter bezeichnet.

Ein Verfahren gemäß Anspruch 5 ermöglicht eine verbesserte Verankerung des Ankerelements im Werkstoff. Insbesondere kann der Werkstoff durch das Ankerelement abgestützt werden. Ein Vorspannen des Ankerelements ist besonders vorteilhaft möglich, indem an einem Befestigungsabschnitt, der insbesondere ein Befestigungsgewinde aufweist, ein Befestigungselement befestigt ist. Das Befestigungselement ist insbesondere eine Befestigungsmutter, die auf das Befestigungsgewinde des Befestigungsabschnitts aufschraubbar ist. Zum Vorspannen ist insbesondere eine Befestigungsscheibe vorgesehen, um eine Vorspannung von dem Befestigungselement auf den Werkstoff zu übertragen. Zusätzlich kann eine oder können mehrere Unterlegscheiben vorgesehen sein.

Ein Ankerelement gemäß Anspruch 6 ist vorteilhaft in dem Bohrloch verankert. Dadurch, dass das Ankerelement ein Schneidgewinde aufweist, wird das Ankerelement unmittelbar in dem Bohrloch verankert. Das Schneidgewinde ist insbesondere ein Verankerungsgewinde. Mit dem Schneidgewinde schneidet sich das Ankerelement, insbesondere unmittelbar, in die Innenwand des Bohrlochs.

Bei einem Verfahren gemäß Anspruch 7 ist die Verankerung des Ankerelements in dem Bohrloch zusätzlich verbessert. Die Haltekraft ist erhöht. Durch das Einfüllen einer Klebemasse in das Bohrloch wird, insbesondere nach dem Aushärten der Klebemasse, eine besonders feste Verankerung des Ankerelements in dem Bohrloch gewährleistet. Die zum Verankern des Ankerelements verwendete Klebemasse ist insbesondere identisch zu dem Klebematerial, das zum Befestigen der Schutzkappe verwendet werden kann. Der Bereitstellungsaufwand und/oder der Handhabungsaufwand für die Durchführung des Verfahrens, insbesondere auf einer Baustelle, ist dadurch reduziert. Insbesondere ist das Verfahren fehlersicher in der Durchführung.

Ein Verfahren mit einem Ankerelement gemäß Anspruch 8 ermöglicht eine besonders langlebige Verankerung. Dadurch, dass das Ankerelement eine Schutzbeschichtung, insbesondere eine Korrosionsbeschichtung, aufweist, sind die freiliegenden Bereiche des Ankerelements zuverlässig vor äußeren Umgebungseinflüssen, insbesondere vor Korrosion, geschützt. Der abgelängte Überstandsabschnitt ist durch die Schutzkappe geschützt.

Eine Anordnung gemäß einem der Ansprüche 9 bis 14 weist im Wesentlichen die Vorteile des jeweils korrespondierenden Verfahrens auf, worauf hiermit verwiesen wird. Eine erfindungsgemäße Anordnung ist unkompliziert herzustellen und kostenreduziert umzusetzen. Eine derartige Anordnung ist robust und langlebig.

Sowohl die in den Patentansprüchen angegebenen Merkmale als auch die in dem nachfolgenden Ausführungsbeispiel der erfindungsgemäßen Anordnung angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der

Weiterbildungen des Erfindungsgegenstandes keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung eines Ausführungsbeispiels anhand der Zeichnung. Es zeigen:

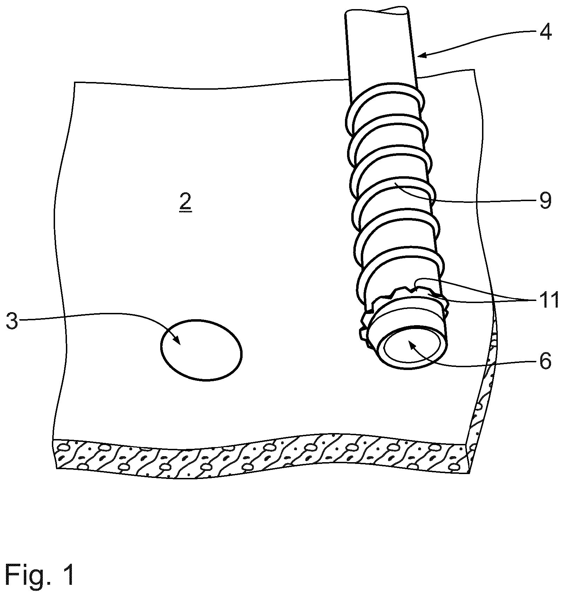

- Fig. 1: eine perspektivische Ansicht einer erfindungsgemäßen Anordnung eines Werkstoffs mit einem Bohrloch sowie einem zu verankernden Ankerelement,
- Fig. 2: eine Fig. 1 entsprechende Darstellung mit dem im Bohrloch verankerten Ankerelement sowie einem daran befestigten Befestigungselement,
- Fig. 3: eine Schnittdarstellung gemäß Schnittlinie III-III in Fig. 2,
- Fig. 4: eine Fig. 2 entsprechende Darstellung mit abgelängtem Überstandsabschnitt,
- Fig. 5: eine Fig. 4 entsprechende Darstellung mit an dem Überstandsabschnitt befestigter Schutzkappe,
- Fig. 6: eine Schnittdarstellung gemäß Schnittlinie VI-VI in Fig. 5.

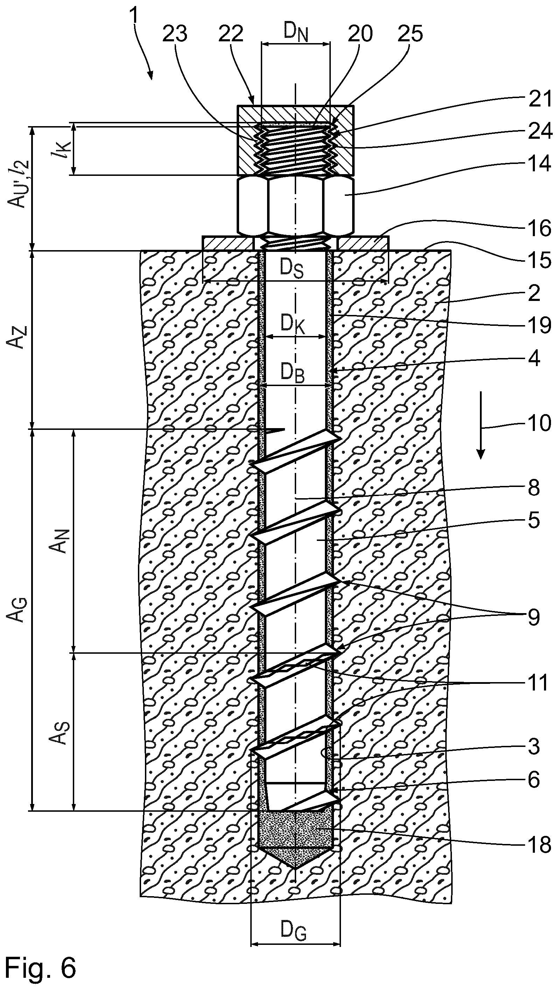

Eine in Fig. 6 als Ganzes mit 1 gekennzeichnete Anordnung umfasst einen Werkstoff 2, insbesondere Beton, in dem ein Bohrloch 3 mit einem Bohrlochdurchmesser D_{B} eingebracht ist.

In dem Bohrloch 3 ist ein Ankerelement 4 verankert. Gemäß dem gezeigten Ausführungsbeispiel ist das Ankerelement 4 als Verbundankerschraube ausgeführt. Das Ankerelement 4 kann auch als Betonschraube oder als Verbundankerelement ausgeführt sein.

Das Ankerelement 4 ist insbesondere aus einem Stahlwerkstoff, insbesondere aus normalem Stahl, insbesondere kohlenstoffhaltigem Stahl oder Edelstahl, hergestellt. Das Ankerelement 4 weist eine die, insbesondere gesamte, Oberfläche des Ankerelements 4 einhüllende Schutzschicht, insbesondere eine Korrosionsschicht, auf.

Das Ankerelement 4 weist einen im Wesentlichen zylindrischen Kern 5 mit einem Kerndurchmesser D_{K} auf.

Der Kern 5 ist mit einem Einführende 6 in dem Bohrloch 3 angeordnet. Der Kern weist ein dem Einführende 6 gegenüberliegendes Außenende 7 auf. Das Ankerelement 4 erstreckt sich von dem Außenende 7 zu dem Einführende 6 entlang einer Mittellängsachse 8.

Einstückig mit dem Kern 5 ist ein Außengewinde 9 ausgebildet, das sich vom Einführende 6 entgegen einer Einschraubrichtung 10 entlang eines Gewindeabschnitts A_{G} erstreckt. Das Außengewinde 9 weist einen Gewindedurchmesser D_{G} auf, der größer ist als der Bohrlochdurchmesser D_{B}. Insbesondere gilt D_{G}/D_{B} ≤ 1,5, insbesondere D_{G}/D_{B} ≤ 1,4, insbesondere D_{G}/D_{B} ≤ 1,3, insbesondere D_{G}/D_{B} ≤ 1,25, insbesondere D_{G}/D_{B} ≤ 1,2, D_{G}/D_{B} ≤ 1,15, insbesondere D_{G}/D_{B} ≤ 1,1, insbesondere D_{G}/D_{B} ≤ 1,05. Das Außengewinde 9 ist entlang eines sich vom Einführende 6 entgegen der Einschraubrichtung 10 erstreckenden Schneidabschnitts A_{S} selbstschneidend ausgeführt. Gemäß dem gezeigten Ausführungsbeispiel weist das Außengewinde 9 in dem Schneidabschnitt A_{S} Schneidelemente 11 auf. An den Schneidabschnitt A_{S} schließt sich ein Normalgewindeabschnitt A_{N} an, wobei gilt As + A_{N} = A_{G}. Es ist auch möglich, dass das Außengewinde 9 keine Schneidelemente 11 aufweist. An den Gewindeabschnitt A_{G} schließt sich ein zylindrischer Zylinderabschnitt A_{Z} an, der eine im Wesentlichen glatte Oberfläche aufweist. Das Außengewinde 9 ist so dimensioniert und gestaltet, dass es in den Werkstoff 2 eingeschraubt werden kann.

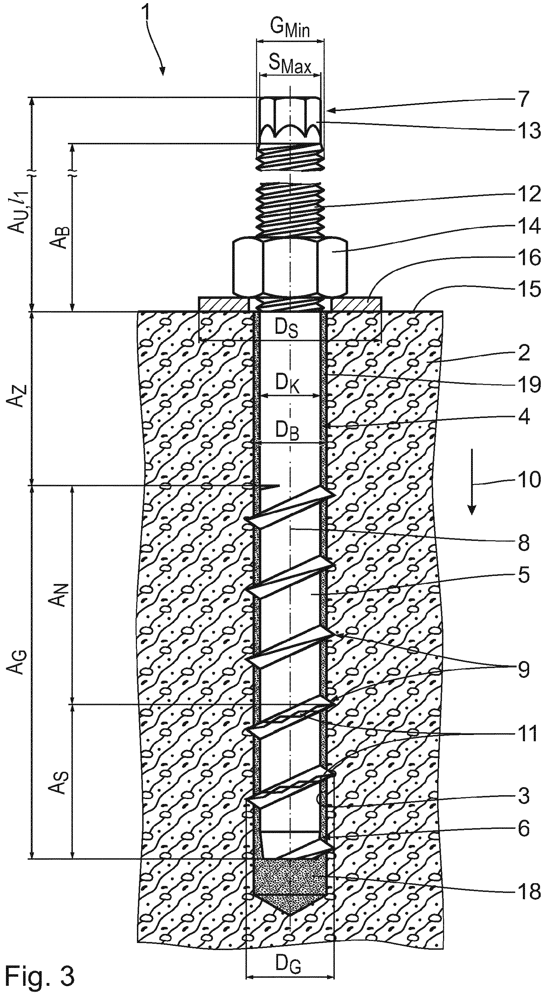

An den Zylinderabschnitt A_{Z} schließt sich ein Befestigungsabschnitt A_{B} an, der in Fig. 3 unterbrochen dargestellt ist. Der Befestigungsabschnitt A_{B} weist ein als normales Metallgewinde, insbesondere als metrisches Gewinde, ausgebildetes Befestigungsgewinde 12 auf. In Einschraubrichtung 10 vor dem Befestigungsgewinde 12 befindet sich im Bereich des Außenendes 7 ein Mehrkantkopf 13, insbesondere ein Sechskantkopf. Dieser weist einen maximalen Außendurchmesser S_{Max} auf, der kleiner ist als ein minimaler Durchmesser G_{Min} des Befestigungsgewindes 12. Dadurch ist es möglich, dass ein Befestigungselement 14, beispielsweise eine Befestigungsmutter, über den Mehrkantkopf 13 geschoben werden kann, um auf das Befestigungsgewinde 12 geschraubt zu werden.

Mit der Befestigungsschraube 14 kann das Ankerelement 4 an dem Werkstoff 2 vorgespannt werden. Um eine von dem Befestigungselement 14 auf den Werkstoff 2 aufgebrachte Vorspannung vorteilhaft in den Werkstoff 2 einzuleiten, ist eine Befestigungsscheibe 16 vorgesehen, die an einer äußeren Oberfläche 15 des Werkstoffs 2 aufliegen kann. Die Befestigungsscheibe weist einen äußeren Scheibendurchmesser D_{S} auf, der größer ist als der Bohrlochdurchmesser D_{B}. Insbesondere gilt D_{S}/D_{B} ≥ 1,2, insbesondere D_{S}/D_{K} ≥ 1,5, insbesondere D_{S}/D_{K} ≥ 2,0, insbesondere D_{S}/D_{K} ≥ 2,5, insbesondere D_{S}/D_{K} ≥ 3,0 und insbesondere D_{S}/D_{K} ≥ 3,5.

Es kann vorteilhaft sein, zwischen dem Befestigungselement 14 und der Befestigungsscheibe 16 eine oder mehrere Unterlegscheiben 17 anzuordnen, die in Fig. 3 und 6 nicht dargestellt sind.

Das Ankerelement steht an der Oberfläche 15 des Werkstoffs 2 mit einem Überstandsabschnitt A_{U} vor. Gemäß dem gezeigten Ausführungsbeispiel in Fig. 3 ist der Überstandsabschnitt A_{U} identisch mit dem Befestigungsabschnitt A_{B}. In Abhängigkeit der Bohrlochtiefe und der jeweiligen Länge des Gewindeabschnitts A_{G} und des Zylinderabschnitts A_{Z} sind Anordnungen denkbar, bei welchen das Ankerelement 4 mit dem Zylinderabschnitt A_{Z} und insbesondere mit dem Gewindeabschnitt A_{G} an der Oberfläche 15 des Werkstoffs 2 vorsteht. In diesem Fall würden der Zylinderabschnitt A_{Z} und insbesondere der Gewindeabschnitt A_{G} zumindest einen Teil des Überstandsabschnitts A_{U} bilden. In diesem Fall wäre der Überstandsabschnitt A_{U} größer als der Befestigungsabschnitt A_{B}.

Es ist auch eine Anordnung denkbar, bei der der Befestigungsabschnitt A_{B} zumindest bereichsweise innerhalb des Bohrlochs 3 angeordnet ist. In diesem Fall wäre der Überstandsabschnitt A_{U} kleiner als der Befestigungsabschnitt A_{B}. In dem Bohrloch 3 ist eine Klebemasse 18 angeordnet, die insbesondere aus styrolfreiem Vinylester und einem Härter besteht. Die Klebemasse 18 ist insbesondere eine selbstaushärtende Verbundmasse. Die Verankerung des Ankerelements 4 im Werkstoff 2 ist durch die Verwendung der Klebemasse 18 verbessert.

Der Überstandsabschnitt A_{U} weist entlang der Mittellängsachse 8 gemäß Fig. 3 eine erste Länge l₁ auf. Die erste Länge l₁ ist gemessen von der Oberfläche 15 des Werkstoffs 2 bis zu dem äußersten Punkt am Außenende 7 des Ankerelements 4.

Im Folgenden wird das Verfahren zum Setzen des Ankerelements 4 in dem Werkstoff 2 näher beschrieben.

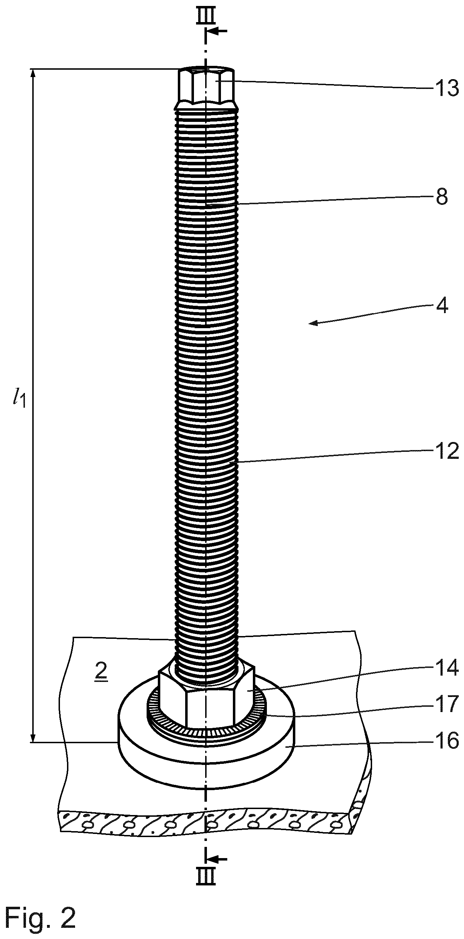

In den Werkstoff 4 wird das im Wesentlichen zylindrische Bohrloch mit dem Bohrlochdurchmesser D_{B} eingebracht. Der Bohrlochdurchmesser D_{B} ist geringfügig größer als der Kerndurchmesser D_{K}, aber kleiner als der Gewindedurchmesser D_{G.} In das Bohrloch 3 wird die Klebemasse 18 eingefüllt. Im Anschluss daran wird das Ankerelement 4 in das Bohrloch 3 eingeschraubt, wobei sich das Außengewinde 9, insbesondere mit den Schneidelementen 11, in eine zylindrische Mantelwand 19 des Bohrlochs 3 schneidet. Das Einschrauben des Ankerelements 4 erfolgt insbesondere mittels eines angetriebenen Werkzeugs, insbesondere mittels eines Schlagschraubers, der an dem Mehrkantkopf 13 aufgesetzt werden kann. Das Einschrauben erfolgt entlang der Einschraubrichtung 10 soweit, bis eine erforderliche Einschraubtiefe erreicht ist. In Abhängigkeit des jeweiligen Anwendungsfalls kann die Einschraubtiefe variieren. Gemäß dem gezeigten Ausführungsbeispiel ist die Einschraubtiefe gleich der Summe der Längen des Gewindeabschnitts A_{G} und des Zylinderabschnitts A_{Z}. Die Befestigungsscheibe 16 und zwei Unterlegscheiben 17 werden auf das Befestigungsgewinde 12 geschoben. Die Unterlegscheiben 17 sind identisch ausgeführt. Die Unterlegscheiben 17 weisen jeweils einen geringeren Außendurchmesser und eine geringere Scheibendicke auf als die Befestigungsscheibe 16. Anschließend wird das Befestigungselement 14, also die Befestigungsmutter, auf das Befestigungsgewinde 12 aufgeschraubt. In Abhängigkeit des Anziehdrehmoments der Befestigungsmutter kann eine Vorspannung auf den Werkstoff 2 festgelegt werden. Dieser Zustand ist in Fig. 2 dargestellt.

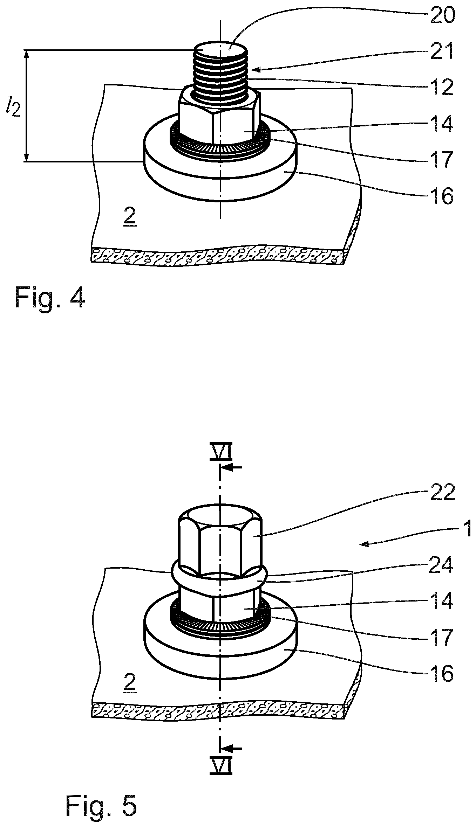

Anschließend wird der Überstandsabschnitt A_{U} abgelängt. Das bedeutet, dass der Überstandsabschnitt A_{U} auf eine zweite Länge l₂ mittels eines Werkzeugs, insbesondere mittels eines Trennschleifers, gekürzt wird. Der Zustand nach dem Ablängen ist in Fig. 4 dargestellt. Durch das Ablängen wird insbesondere der Mehrkantkopf 13 von dem Ankerelement 4 getrennt, insbesondere wird das Befestigungsgewinde 12 gekürzt. Die zweite Länge l₂ des abgelängten Überstandsabschnitts A_{U'} endet an einer Schnittfläche 20, die durch das Ablängen des Überstandsabschnitts A_{U} erzeugt worden ist.

Vorteilhaft ist es, wenn ein am Befestigungselement 14 vorragender Abschnitt 21 des abgelängten Überstandsabschnitts A_{U'} sich entlang der Mittellängsachse 8 über mehrere, insbesondere entlang von mindestens zwei Gewindegängen, insbesondere entlang von mindestens drei Gewindegängen, insbesondere entlang von mindestens vier Gewindegängen, insbesondere entlang von mindestens fünf Gewindegängen und insbesondere entlang von mindestens sechs Gewindegängen erstreckt.

Anschließend wird an dem abgelängten Überstandsabschnitt A_{U'} eine Schutzkappe 22 befestigt. Die Schutzkappe 22 ist als Hutmutter ausgeführt und weist ein Innengewinde 23 auf, das mit dem Befestigungsgewinde 12 des Ankerelements 4 korrespondiert.

Die Schutzkappe 22 ist mittels eines Klebematerials 24 an dem Ankerelement 4 befestigt. Das Klebematerial 24 ist insbesondere eine aushärtbare Masse, insbesondere ein frost- und tausalzbeständiger Verbundmörtel. Insbesondere ist das Klebematerial 24 identisch zu der Klebemasse 18.

Besonders vorteilhaft ist die Handhabung dann, wenn das Klebematerial 24 in die Schutzkappe gefüllt und anschließend die mit dem Klebematerial 24 gefüllte Schutzkappe auf das Befestigungsgewinde 12 aufgeschraubt wird.

Die Klebemasse 24 verteilt sich insbesondere gleichmäßig und insbesondere vollständig in einem von der Schutzkappe 22 und dem Befestigungsgewinde 12 begrenzten Zwischenraum 25. Insbesondere ist die Schnittfläche 20 vollständig von dem Klebematerial 24 abgedeckt. Die Schnittfläche 20 ist insbesondere versiegelt. Der Zwischenraum 25 ist im Wesentlichen ringförmig bezüglich der Mittellängsachse 8 ausgeführt und weist eine Klebelänge l_{K} auf. Vorteilhaft ist es, wenn die Klebelänge l_{K} mindestens 0,15 % des Nenndurchmessers D_{N} des Befestigungsgewindes 12 beträgt. Insbesondere gilt: l_{K}/D_{N} ≥ 0,25, insbesondere l_{K}/D_{N} ≥ 0,35 und insbesondere l_{K}/D_{N} ≥ 0,4.

Die Klebelänge l_{K} erstreckt sich entlang der Mittellängsachse 8 entlang mindestens zwei Gewindegängen des Befestigungsgewindes 12, insbesondere entlang mindestens drei Gewindegängen und insbesondere entlang mindestens vier Gewindegängen.

## Patentansprüche

1. Verfahren zum Setzen eines Ankerelements (4) umfassend die Verfahrensschritte
- Einführen des Ankerelements (4) in ein Bohrloch (3) in einem Werkstoff (2), wobei das Ankerelement (4) aus dem Bohrloch (3) mit einem Überstandsabschnitt (A_{U}) herausragt,
- Verankern des Ankerelements (4) in dem Bohrloch (3),
**gekennzeichnet durch**
- Ablängen des Überstandsabschnitts (A_{U}),
- Befestigen einer Schutzkappe (22) an dem abgelängten Überstandsabschnitt (A_{U}'),
-- wobei die Schutzkappe (22) mittels eines Klebematerials (24) befestigt wird,
-- wobei eine beim Ablängen erzeugte Schnittfläche (20) des Ankerelements (4) von der Schutzkappe (22) und von dem Klebematerial (24) abgedeckt ist.

2. Verfahren gemäß Anspruch 1, **dadurch gekennzeichnet, dass** sich das Klebematerial (24) in einem Zwischenraum (25) zwischen der Schutzkappe (22) und dem einen Nenndurchmesser (D_{N}) aufweisenden Ankerelement (4), insbesondere ringförmig, entlang einer Klebelänge (l_{K}) erstreckt, wobei gilt l_{K} ≥ 0,15 · D_{N}, insbesondere l_{K} ≥ 0,25 · D_{N}, insbesondere l_{K} ≥ 0,35 · D_{N} und insbesondere l_{K} ≥ 0,4 · D_{N}.

3. Verfahren gemäß einem der vorstehenden Ansprüche, **dadurch gekennzeichnet, dass** die Schutzkappe (22) mit einem Innengewinde (23) an einem korrespondierenden Außengewinde (12) des Ankerelements (4) eingreift.

4. Verfahren gemäß einem der vorstehenden Ansprüche, **dadurch gekennzeichnet, dass** die beim Ablängen erzeugte Schnittfläche (20) des Ankerelements (4) von der Schutzkappe (22), insbesondere von dem Klebematerial (24), vollständig abgedeckt ist.

5. Verfahren gemäß einem der vorstehenden Ansprüche, **gekennzeichnet durch** Vorspannen des Ankerelements (4) an dem Werkstoff (2), insbesondere mittels eines an einem Befestigungsabschnitt (12) des Ankerelements (4) befestigten Befestigungselements (14).

6. Verfahren gemäß einem der vorstehenden Ansprüche, **dadurch gekennzeichnet, dass** das Ankerelement (4) ein Schneidgewinde (9) aufweist, mit dem das Ankerelement (4) in das Bohrloch (3) eingeschraubt ist.

7. Verfahren gemäß einem der vorstehenden Ansprüche, **gekennzeichnet durch** Einfüllen einer Klebemasse (18) in das Bohrloch (3) zum Verankern des Ankerelements (4) in dem Bohrloch (3).

8. Verfahren gemäß einem der vorstehenden Ansprüche, **dadurch gekennzeichnet, dass** das Ankerelement (4) eine Schutzbeschichtung, insbesondere eine Korrosionsbeschichtung, aufweist.

9. Anordnung mit einem in einem Bohrloch (3) in einem Werkstoff (2) verankerten Ankerelement (4),
**dadurch gekennzeichnet, dass**
- das Ankerelement (4) aus dem Bohrloch (3) mit einem abgelängten Überstandsabschnitt (A_{U}') herausragt, an dem eine Schutzkappe (22) befestigt ist,
- die Schutzkappe (22) mittels eines Klebematerials (24) befestigt ist, und
- eine beim Ablängen erzeugte Schnittfläche (20) des Ankerelements (4) von der Schutzkappe (22) und von dem Klebematerial (24) abgedeckt ist.

10. Anordnung gemäß Anspruch 9, **dadurch gekennzeichnet, dass** das Ankerelement (4) eine Schutzbeschichtung, insbesondere eine Korrosionsbeschichtung, aufweist.

11. Anordnung gemäß Anspruch 9 oder 10, **dadurch gekennzeichnet, dass** das Ankerelement (4) ein Schneidgewinde (9) aufweist, mit dem das Ankerelement (4) in das Bohrloch (3) eingeschraubt ist.

12. Anordnung gemäß einem der Ansprüche 9 bis 11, **dadurch gekennzeichnet, dass** sich das Klebematerial (24) in einem Zwischenraum (25) zwischen der Schutzkappe (22) und dem einen Nenndurchmesser (D_{N}) aufweisenden Ankerelement (4), insbesondere ringförmig, entlang einer Klebelänge (l_{K}) erstreckt, wobei gilt l_{K} ≥ 0,15 · D_{N}, insbesondere l_{K} ≥ 0,25 · D_{N}, insbesondere l_{K} ≥ 0,35 · D_{N} und insbesondere l_{K} ≥ 0,4 · D_{N}.

13. Anordnung gemäß einem der Ansprüche 9 bis 12, **dadurch gekennzeichnet, dass** die Schutzkappe (22) mit einem Innengewinde (23) an einem korrespondierenden Außengewinde (12) des Ankerelements (4) eingreift.

14. Anordnung gemäß einem der Ansprüche 11 bis 13, **dadurch gekennzeichnet, dass** das Ankerelement (4) an dem Werkstoff (2), insbesondere mittels eines an einem Befestigungsabschnitt (12) des Ankerelements (4) befestigten Befestigungselements (14), vorgespannt angeordnet ist.

## Claims

1. Method for setting an anchor element (4) comprising the method steps of
- inserting an anchor element (4) into a borehole (3) in a material (2), wherein the anchor element (4) protrudes from the borehole (3) with a protrusion section (A_{U}),
- anchoring the anchor element (4) in the borehole (3),
**characterized by**
- cutting the protrusion section (A_{U}) to length,
- attaching a protective cap (22) to the cut-to-length protrusion section (A_{U}'),
-- wherein the protective cap (22) is attached by means of an adhesive material (24),
-- wherein a cut surface (20) of the anchor element (4) produced during cutting to length is covered by the protective cap (22) and the adhesive material (24).

2. Method according to claim 1, **characterised in that** the adhesive material (24) extends in an intermediate space (25) between the protective cap (22) and the anchor element (4) having a nominal diameter (D_{N}), in particular in an annular shape, along an adhesive length (1_{K}), wherein 1_{K} ≥ 0.15 · DN, in particular 1_{K} ≥ 0.25 · DN, in particular 1_{K} ≥ 0,35 · DN and in particular 1_{K} ≥ 0,4 · DN.

3. Method according to one of the preceding claims, **characterised in that** the protective cap (22) engages with an internal thread (23) on a corresponding external thread (12) of the anchor element (4).

4. Method according to one of the preceding claims, **characterised in that** the cut surface (20) of the anchor element (4) produced during cutting-to-length is completely covered by the protective cap (22), in particular by the adhesive material (24).

5. Method according to one of the preceding claims, **characterised by** pretensioning the anchor element (4) on the material (2), in particular by means of a fastening element (14) attached to a fastening section (12) of the anchor element (4).

6. Method according to one of the preceding claims, **characterised in that** the anchor element (4) has a cutting thread (9), with which the anchor element (4) is screwed into the borehole (3).

7. Method according to one of the preceding claims, **characterised by** filling the borehole (3) with an adhesive compound (18) in order to anchor the anchor element (4) in the borehole (3).

8. Method according to one of the preceding claims, **characterised in that** the anchor element (4) has a protective coating, in particular an anti-corrosion coating.

9. Arrangement having an anchor element (4) anchored in a borehole (3) in a material (2),
**characterised in that**
- the anchor element (4) protrudes from the borehole (3) with a cut-to-length protrusion section (A_{U}'), to which a protective cap (22) is attached,
- the protective cap (22) is attached by means of an adhesive material (24), and
- a cut surface (20) of the anchor element (4) produced during cutting to length is covered by the protective cap (22) and the adhesive material (24).

10. Arrangement according to claim 9, **characterised in that** the anchor element (4) has a protective coating, in particular an anti-corrosion coating.

11. Arrangement according to claim 9 or 10, **characterised in that** the anchor element (4) has a cutting thread (9), with which the anchor element (4) is screwed into the borehole (3).

12. Arrangement according to one of claim 9 to 11, **characterised in that** the adhesive material (24) extends in an intermediate space (25) between the protective cap (22) and the anchor element (4) having a nominal diameter (D_{N}), in particular in an annular shape, along an adhesive length (1_{K}), wherein 1_{K} ≥ 0.15 · DN, in particular 1_{K} ≥ 0.25 · DN, in particular 1_{K} ≥ 0,35 · DN and in particular 1_{K} ≥ 0,4 · D_{N}.

13. Arrangement according to one of claim 9 to 12, **characterised in that** the protective cap (22) engages with an internal thread (23) on a corresponding external thread (12) of the anchor element (4).

14. Arrangement according to one of claim 11 to 13, **characterised in that** the anchor element (4) is pre-tensioned on the material (2), in particular by means of a fastening element (14) attached to a fastening section (12) of the anchor element (4).

## Revendications

1. Procédé de mise en place d'un élément d'ancrage (4) comprenant les étapes de procédé
- introduction de l'élément d'ancrage (4) dans un trou percé (3) situé dans un matériau (2), l'élément d'ancrage (4) dépassant du trou percé (3) avec une partie en saillie (A_{U}),
- ancrage de l'élément d'ancrage (4) dans le trou percé (3),
**caractérisé par**
- la mise à longueur de la partie en saillie (A_{U}),
- la fixation d'un capuchon de protection (22) sur la partie en saillie (A_{U}') mise à longueur,
-- le capuchon de protection (22) étant fixé au moyen d'un matériau adhésif (24),
-- une surface de coupe (20) de l'élément d'ancrage (4) générée lors de la mise à longueur étant recouverte par le capuchon de protection (22) et par le matériau adhésif (24).

2. Procédé selon la revendication 1, **caractérisé en ce que** le matériau adhésif (24) s'étend, en particulier en forme d'anneau, le long d'une longueur de collage (l_{K}), dans un espace intermédiaire (25) entre le capuchon de protection (22) et l'élément d'ancrage (4) doté d'un diamètre nominal (D_{N}), étant entendu que l_{K} ≥ 0,15 · D_{N}, en particulier l_{K} ≥ 0,25 · D_{N}, en particulier l_{K} ≥ 0,35 · D_{N} et en particulier l_{K} ≥ 0,4 · D_{N}.

3. Procédé selon l'une des revendications précédentes, **caractérisé en ce que** le capuchon de protection (22) vient en prise par un filetage intérieur (23) avec un filetage extérieur (12) correspondant de l'élément d'ancrage (4).

4. Procédé selon l'une des revendications précédentes, **caractérisé en ce que** la surface de coupe (20) de l'élément d'ancrage (4) générée lors de la mise à longueur est entièrement recouverte par le capuchon de protection (22), en particulier par le matériau adhésif (24).

5. Procédé selon l'une des revendications précédentes, **caractérisé par** la sollicitation de l'élément d'ancrage (4) sur le matériau (2), en particulier au moyen d'un élément de fixation (14) fixé à une partie de fixation (12) de l'élément d'ancrage (4).

6. Procédé selon l'une des revendications précédentes, **caractérisé en ce que** l'élément d'ancrage (4) présente un filetage autotaraudeur (9), au moyen duquel l'élément d'ancrage (4) est vissé dans le trou percé (3).

7. Procédé selon l'une des revendications précédentes, **caractérisé par** le remplissage d'une masse adhésive (18) dans le trou percé (3) pour ancrer l'élément d'ancrage (4) dans le trou percé (3).

8. Procédé selon l'une des revendications précédentes, **caractérisé en ce que** l'élément d'ancrage (4) présente un revêtement protecteur, en particulier un revêtement anticorrosion.

9. Agencement doté d'un élément d'ancrage (4) ancré dans un trou percé (3) situé dans un matériau (2),
**caractérisé en ce que**
- l'élément d'ancrage (4) dépasse du trou percé (3) avec une partie en saillie (AU') mise à longueur, sur laquelle est fixé un capuchon de protection (22),
- le capuchon de protection (22) est fixé au moyen d'un matériau adhésif (24), et
- une surface de coupe (20) de l'élément d'ancrage (4) générée lors de la mise à longueur est recouverte par le capuchon de protection (22) et par le matériau adhésif (24).

10. Agencement selon la revendication 9, **caractérisé en ce que** l'élément d'ancrage (4) présente un revêtement protecteur, en particulier un revêtement anticorrosion.

11. Procédé selon la revendication 9 ou 10, **caractérisé en ce que** l'élément d'ancrage (4) présente un filetage autotaraudeur (9), au moyen duquel l'élément d'ancrage (4) est vissé dans le trou percé (3).

12. Agencement selon l'une des revendications 9 à 11, **caractérisé en ce que** le matériau adhésif (24) s'étend, en particulier en forme d'anneau, le long d'une longueur de collage (l_{K}), dans un espace intermédiaire (25) entre le capuchon de protection (22) et l'élément d'ancrage (4) doté d'un diamètre nominal (D_{N}), étant entendu que l_{K} ≥ 0,15 · D_{N}, en particulier l_{K} ≥ 0,25 · D_{N}, en particulier l_{K} ≥ 0,35 · D_{N} et en particulier l_{K} ≥ 0,4 · D_{N}.

13. Agencement selon l'une des revendications 9 à 12, **caractérisé en ce que** le capuchon de protection (22) vient en prise par un filetage intérieur (23) avec un filetage extérieur (12) correspondant de l'élément d'ancrage (4).

14. Agencement selon l'une des revendications 11 à 13, **caractérisé en ce que** l'élément d'ancrage (4) est agencé de manière sollicitée sur le matériau (2), en particulier au moyen d'un élément de fixation (14) fixé à une partie de fixation (12) de l'élément d'ancrage (4).
